# EUROPEAN PATENT APPLICATION

(11) **EP 0 952 650 A2**
(43) Date of publication of application: **27.10.1999**
(21) Application number: 99107733.0
(22) Date of filing: 19.04.1999
(51) Int. Cl.: H02B 1/36

(54) **A switch system of the drawer type**

(30) Priority: 20.04.1998 DK 54498
(71) Applicant: CUBIC-Modulsystem A/S, 9700 Bronderslev (DK)
(72) Inventor: Poulsen, Lars, 9200 Aalborg SV (DK); Sinding Pedersen, Ole, 9640 Farso (DK)
(74) Representative: Gregersen, Niels Henrik

(57) **Abstract**

A switch of the drawer type (draw-out system) for a modular switchboard, comprising a drawer chassis (36) for receiving a drawer shaped switch housing (12), which in a back wall (14) has a system of supply switches (16) arranged to be connected with supply rails, a system of main current switches (24) arranged to be connected with an item of use, e.g. a motor, as the switch drawer (12) in that case contains a contactor with motor starter together with a system of auxiliary current switches (22) arranged to connect the control components of the switch drawer with an external control circuit, and which furthermore is arranged to be connected with the external control system, when the switch drawer (12) is partly inserted into the drawer chassis (36) but without said supply and main current switches (16,24) being activated or current-carrying, where the switch housing (12) extending from said back wall (14) is designed with a lateral cut (18) in which there is mounted a slidable support arrangement (20) for said system of auxiliary switches (22), which support arrangement (20) comprises control means (26,34) arranged to interact with complementary control means (42,44) of a corresponding stationary support arrangement (40) for a system of complementary of auxiliary current switches mounted in a side wall of the drawer chassis (36), as said auxiliary current switches are of the plug type. By simple means there is hereby achieved an improved switch system of the drawer type (draw-out system), where the placing of the auxiliary switches in said lateral cut makes it possible to use more precise plugs as auxiliary switches together with achieving easier access for mounting and exchanging components in the drawer shape switch housing.

## Description

The present invention concerns a switch system of the drawer type (draw-out system), especially for a modular switchboard and of the kind indicated in the preamble of claim 1.

In connection with construction of modular switch board systems, especially so-called steel enclosured switch boards, out of consideration to the operational reliability there is often used switch systems of the drawer type (draw-out type), where, for example, maximum power switches and/or motor starter are mounted in a drawer system, so that a possibly damaged switch or motor starter may be substituted quickly and easily with a corresponding spare unit.

By known switches of the draw-out type there is most often utilized systems with slide switches as auxiliary switches which are mounted transversely along the upper side of the drawer shaped switch housing, and which, with a view to making allowance for a certain sliding movement, interact with stationary slide switches mounted in the upper side of the drawer chassis. This known arrangement of the auxiliary switches, however, implies some drawbacks, because the whole system of auxiliary switches in the upper side of the switch housing most often has to be demounted in order to give access to mounting or exchange of switch components inside the switch housing, and because the construction of the slide switches itself makes it necessary to use much time for precise adjustments at mounting, repair and operational service alike.

The invention has the purpose of indicating a switch system of the drawer type and which by means of simple arrangements makes it possible to achieve an improved switch system of the drawer type (draw-out system), where it is possible to use more precise plugs as auxiliary switches together with achieving an easier access when mounting and exchanging components inside the drawer shaped switch housing.

The switch system according to the invention is characterised in that the drawer shaped switch housing extending from said back wall is designed with a lateral cut in which there is mounted a slidable support arrangement for said system of auxiliary switches, which support arrangement comprises control means arranged to interact with complementary control means of a corresponding stationary support arrangement for a complementary system of auxiliary current switches mounted on a side wall of the drawer chassis, as said auxiliary current switches are of the plug type. By means of simple measures there is hereby achieved an improved switch system of the drawer type (draw-out system) where the placing of the auxiliary switches in said lateral cut makes it possible to use more precise plugs as auxiliary switches and at the same tid makes it easier to get access for mounting and exchanging components inside the drawer shaped switch housing.

The switch system according to the invention is suitably designed in such a way that the slidable support arrangement is arranged to be slided about 35 mm in the longitudinal direction, i.e. in the direction of movement of the drawer shaped switch housing, that the support arrangement is spring biased to assuming a position closest to the said back wall, and that the support arrangement is arranged to be locked in this position (test position).

Of security reasons the switch system according to the invention is designed so that it comprises a mechanical blocking preventing that switch or contactor can be turned into the test position when the switch drawer is completely inserted into the drawer chassis, i.e. when the supply and main current switches are activated or current-carrying.

Preferably the switch system according to the invention is designed so that also said system of main current switches in the case of switches up to 40 A are constituted by plugs mounted on said support arrangements in said lateral cut in the drawer shaped switch housing and on a side wall of the drawer chassis, respectively.

For the purpose of simplifying control means for said support arrangements, the switch system according to the invention is suitably designed so that said control means for the respective support arrangements are constituted by projecting guide pins with arrowshaped heads and convex, conical shoulders together with complementary guide holes with concave, conical guide surfaces arranged to receive said shoulders of the guide pins, which related to the support arrangement on the side wall of the draer chassis being floatingly suspended, i.e. it may be moved a little both in horizontal and vertical directions, implies a very well-functioning plug system, which, as indicated, advantageously may be used both for auxiliary current switches and for small main current switches (max 40 A).

The invention is explained more closely in the following in connection with the drawing, on which:
- Fig. 1: shows an illustration of a know modular switch board with a switch system of the drawer type (draw-out system) as in the invention,
- Fig. 2: shows an illustration of a known switch drawer of the draw-out type, as seen from above,
- Fig. 3: shows a perspective view of an embodiment of a switch system of the drawer type (draw-out type) according to the invention, as seen from the front,
- Fig. 4: shows a perspective view of an embodiment of a switch drawer of the draw-out type according to the invention, as seen from the back,
- Fig. 5: shows a perspective, sectional view of an embodiment of a slidable switch system at a switch drawer cf. Fig. 4, as shown in an advanced position,
- Fig. 6: shows a corresponding perspective, sectional view corresponding to Fig. 5, but in a retracted position,
- Fig. 7: shows a perspective view of a drawer chassis with switch system for receiving a switch system of the drawer type according to the invention,
- Fig. 8: shows a perspective, sectional view cf. Fig. 7 of a chassis detail with floatingly suspended support arrangement for switch system for connection with the switch drawer according to the invention,
- Fig. 9: shows a perspective view of a right side part of a switch drawer according to the invention with a slidably arranged switch system, as seen from the inside,
- Fig. 10: shows a perspective view of a right side part of a switch drawer according to the invention with a slidably arranged switch system, as seen from the outside,
- Fig. 11: shows a perspective, sectional view of a drawer chassis with an altenative, floatingly suspended support arrangement for a switch system for connection with a switch drawer according to the invention, and
- Fig. 12: shows a perspective, sectional view of an alternative support arrangement for the switch system cf. Fig. 11.

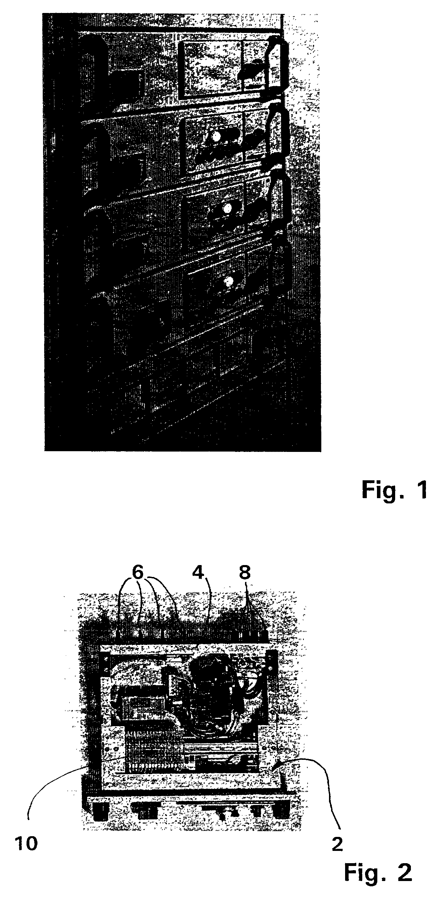

Fig. 1 shows a view of a modular switch board made by the applicant and with a switch section of the drawer type (draw-out) and of which the known drawer shaped switch housing 2 form a part, which in a back wall 4 has a system of supply switches 6 and a system of main supply swithces 8, and which at an upper side is provided with a system of auxiliary switches 10 (slide switch type), which as shown block a large part of the upper side of the switch housing 2, namely almost all of the forward part of upper side of the switch housing.

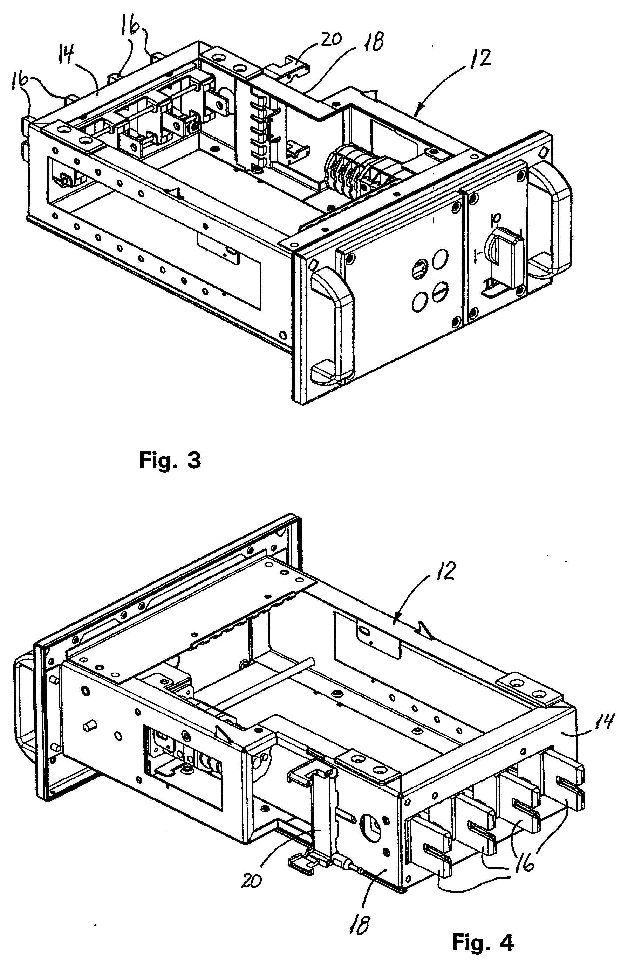

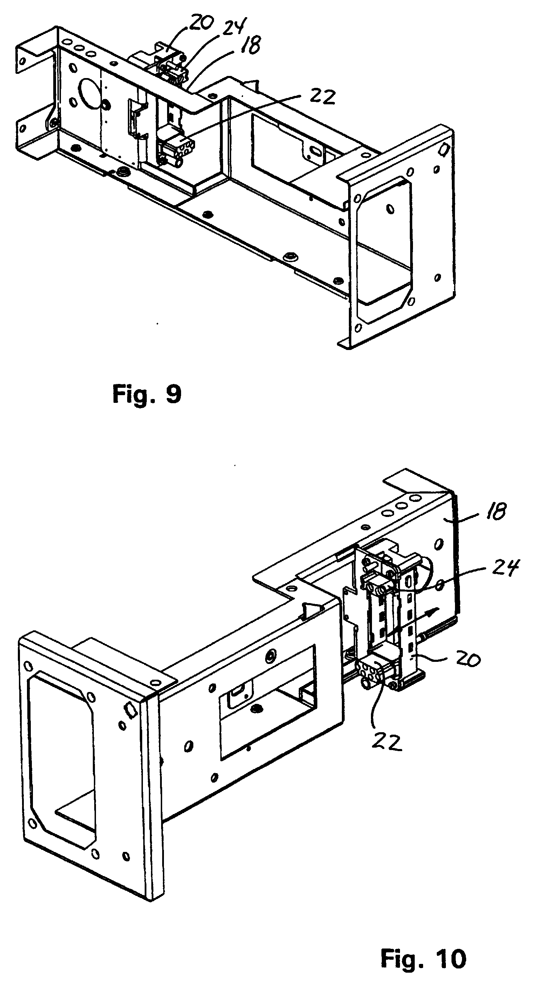

The embodiment shown in Figs. 3 and 4 of a draw-out switch according to the invention comprises a drawer shaped switch housing 12 which in a back wall 14 comprises a system of supply switches 16, and which in a right side is designed with a lateral cut 18 in which space is made for a slidable support arrangement 20 for a system of auxiliary switches 22 together with possibly a system of main current switches 24 (Figs. 9 and 10) for the case that it has to do with a switch drawer for max. 40 A.

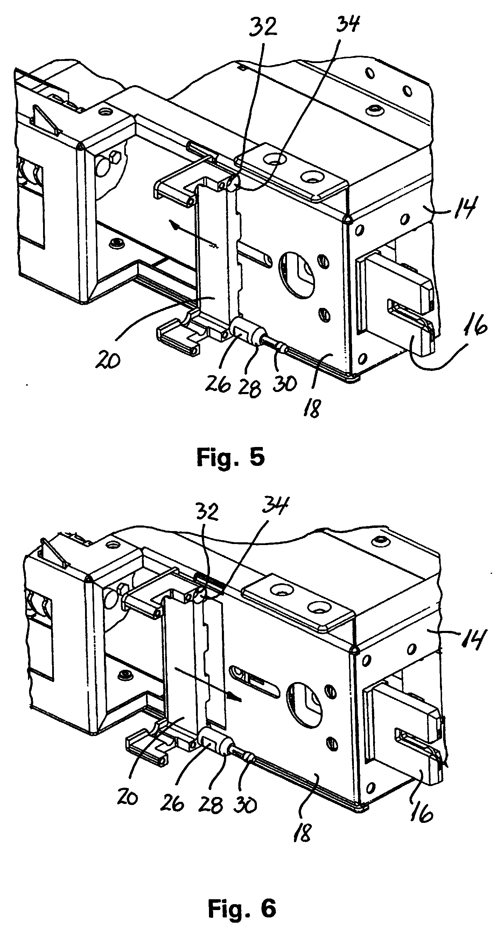

Figs. 5 and 6 show more clearly that the slidable support arrangement 20 comprises a projecting guide pin 26 with a conical guide surface 28 and an arrow-shaped guide head 30 and a guide hole 32 with a concave, conical guide surface 34. The support arrangement 20 is supported slidably over a distance of about 35 mm between the advanced test position shown in Fig. 5 and the operational position shown in Fig. 6, as the support arrangement 20 is spring biased toward assuming the test position cf. Fig. 5, in which the support arrangement 20 and thereby the system of auxiliary current switches and possible main current switches may be further locked.

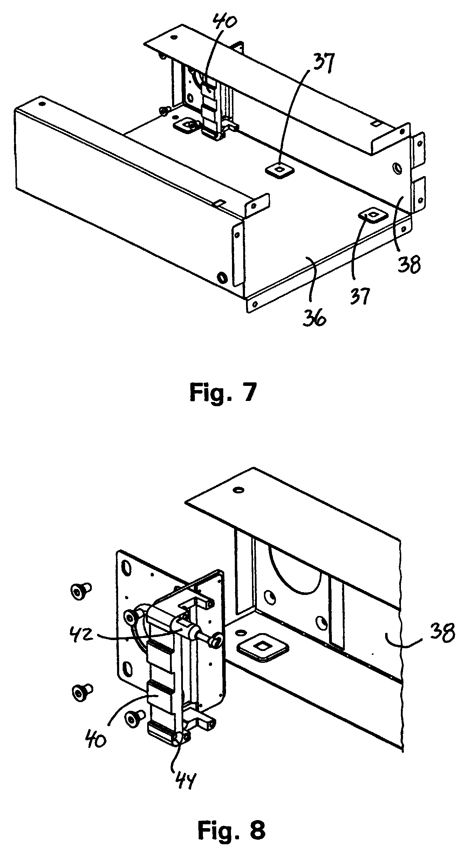

The drawer chassis 36 shown in Fig. 7 comprises a floatingly suspended support arrangement in a right side wall 38, i.e. it is slightly movable both in horizontal and vertical directions, and which in principle correspond to the support arrangement 20 of the switch drawer, but which is complementary thereto, as the support arrangement 40 at the top comprises a guide pin 42 similar to the guide pin 26 and at the bottom a guide hole 44 similar to the guide hole 32. In the bottom of the drawer chassis 36 there is formed a number of pressed projections 37 constituting guides for the right side wall of the drawer, i.e. which serves for guiding the switch drawer 12 correctly in lateral direction and which possibly can be substituted by a rail with the same function.

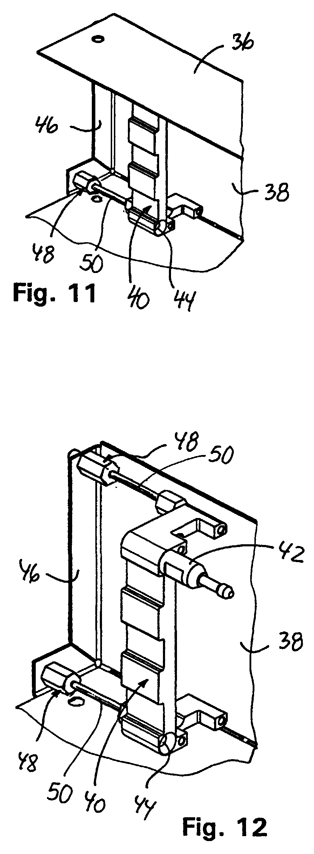

Figs. 11 and 12 show an alternative way of making a floating suspension of the support arrangement 40 in the drawer chassis 36, where the movement up-and-down and sideways is achieved by fastening the support arrangement 40 in a back side wall section 46 by means of rather long support bolts 48, which comprise central, preferably round, thin rods 50 of spring steel, so that guide pin 42 and guide hole 44 at the support arrangement 40 hereby receive the necessary mobility in relation to the guide pin 26 and guide hole 32, respectively, of the switch drawer.

## Claims

1. A switch of the drawer type (draw-out system), especially for a modular switchboard, and comprising a drawer chassis for receiving a drawer shaped switch housing, which in a back wall has a system of supply switches arranged to be connected with supply rails at the insertion of the switch drawer, a system of main current switches arranged to be connected with an item of use, e.g. a motor, at the insertion of the switch drawer into the drawer chassis, as the switch drawer in that case contains a contactor with motor starter together with a system of auxiliary current switches arranged to connect the control components of the switch drawer with an external control circuit, and which furthermore is arranged to form a connection with the external control system, when the switch drawer is partly inserted into the drawer chassis but without said supply and main current switches being activated or current-carrying, **characterised** in that the drawer shaped switch housing extending from said back wall is designed with a lateral cut in which there is mounted a slidable support arrangement for said system of auxiliary switches, which support arrangement comprises control means arranged to interact with complementary control means of a corresponding stationary support arrangement for a complementary system of auxiliary current switches mounted on a side wall of the drawer chassis, as said auxiliary current switches are of the plug type.

2. A switch system according to claim 1, **characterised** in that the slidable support arrangement is arranged to be slided about 35 mm in the longitudinal direction, i.e. in the direction of movement of the drawer shaped switch housing, that the support arrangement is spring biased toward assuming a position closest to the said back wall, and that the support arrangement is arranged to be locked in this position (test position).

3. A switch system according to claim 1, **characterised** in that it comprises a mechanical blocking preventing that switch or contactor can be turned into the test position when the switch drawer is completely inserted into the drawer chassis, i.e. when the supply and main current switches are activated or current-carrying.

4. A switch system according to claim 1, **characterised** in that the said system of main current switches in the case of switches up to 40 A are constituted by plugs mounted on said support arrangements in said lateral cut in the drawer shaped switch housing and on a side wall of the drawer chassis, respectively.

5. A switch system according to claim 1, **characterised** in that said control means for the respective support arrangements are constituted by projecting guide pins with arrowshaped heads and convex, conical shoulders together with complementary guide holes with concave, conical guide surfaces arranged to receive said shoulders of the guide pins.

6. A switch system according to claim 1 and 5, **characterised** in that the support arrangement on the side wall of the drawer chassis is suspended floatingly, i.e. it may be moved a little both in horizontal and vertical directions.
